# EUROPÄISCHE PATENTSCHRIFT

(11) **EP 2 714 438 B1**
(45) Veröffentlichungstag und Bekanntmachung des Hinweises auf die Patenterteilung: **03.01.2018**
(21) Anmeldenummer: 12732798.9
(22) Anmeldetag: 23.05.2012
(51) Int. Cl.: B60G 11/27, B60G 17/052, B60G 17/0185

(54) **VERFAHREN ZUR ÜBERWACHUNG UND STEUERUNG EINES PNEUMATISCHEN NIVEAUREGELSYSTEMS EINES FAHRWERKSYSTEMS**
METHOD FOR MONITORING AND CONTROLLING A PNEUMATIC RIDE-HEIGHT CONTROL SYSTEM OF A CHASSIS SYSTEM
PROCÉDÉ DE SURVEILLANCE ET DE COMMANDE D'UN SYSTÈME PNEUMATIQUE DE RÉGULATION DU NIVEAU D'UN SYSTÈME DE CHÂSSIS

(30) Priorität: 27.05.2011 DE 102011076617; 18.10.2011 DE 102011084669
(43) Veröffentlichungstag der Anmeldung: 09.04.2014
(73) Patentinhaber: Continental Teves AG & Co. OHG, 60488 Frankfurt (DE)
(72) Erfinder: HOINKHAUS, Hermann, 30938 Burgwedel (DE); KÖNIG, Oliver, 30173 Hannover (DE); NETTELMANN, Marc, 31061 Alfeld (DE); SCHÜNEMANN, Werner, 29308 Winsen/Aller (DE); TEPE, Ralph, 30167 Hannover (DE)
(86) Internationale Anmeldenummer: PCT/EP2012/059530
(87) Internationale Veröffentlichungsnummer: WO 2012/163742

(56) Entgegenhaltungen:
- EP-A1- 0 397 181
- EP-A2- 0 318 013
- JP-A- 2 057 415
- US-A- 4 659 104
- US-A- 4 827 416

## Beschreibung

Die Erfindung betrifft ein Verfahren zur Überwachung und Steuerung eines pneumatischen Niveauregelsystems eines Fahrwerksystems, eine Vorrichtung zur Überwachung und Steuerung eines pneumatischen Niveauregelsystems eines Fahrwerksystems sowie ein Computerprogrammprodukt.

Die Schrift US 4 659 104 A, die den Oberbegriff der Ansprüche 1 und 12 offenbart, beschreibt ein pneumatisches Niveauregelverfahren, bei einer ungewollten Fahrwerkshöhe die Ausfallsicherheit erhöhen soll. Dabei wird die aktuelle Fahrwerkshöhe ständig gemessen und mit einem unteren und einem oberen Schwellwert verglichen. Unterschreitet oder Überschreitet nun die aktuelle Höhe des Fahrwerks einen dieser Schwellwerte, wird die Zeit gemessen in der die aktuelle Höhe außerhalb des festgelegten Bereichs liegt und mit einem vordefinierten Zeitintervall verglichen. Befindet sich die aktuelle Höhe über das Zeitintervall hinaus außerhalb des Bereichs, wird anschließend das aktuelle Niveau mit dem unteren Schwellwert verglichen um in einer Steuerung die entsprechenden Statusindikatoren zu setzten. Die Steuerung veranlasst die Niveauregelanlage dazu mittels Ventilschaltungen Luft dem System zuzuführen oder abzulassen und somit eine Höhenänderung vorzunehmen. Liegt das neue Niveau wieder innerhalb der Schwellwerte, werden die Statusindikatoren in der Steuerung zurückgesetzt. Mit dieser Niveauregelung soll sichergestellt werden, dass sich das Fahrwerk nicht über einen längeren Zeitraum hinaus außerhalb eines gewünschten Höhenbereichs befindet.

Die ISO 26262, eine ISO-Norm für sicherheitsrelevante elektrische/elektronische Systeme in Kraftfahrzeugen, fordert innerhalb ihres Prozess-Rahmenwerks und Vorgehenmodells eine Durchführung einer Gefährdungsanalyse und Risikoabschätzung. Dazu müssen zunächst die potenziellen Gefährdungen des elektrischen/elektronischen Systems eines Kraftfahrzeugs identifiziert werden. Dies geschieht durch Betrachten der Fehlerfunktionen des untersuchten Systems in spezifischen Gefahrensituationen. Anschließend wird jede Gefährdung mit einer Sicherheitsanforderungsstufe in vier Kategorien klassifiziert bzw. als nicht sicherheitsrelevant eingeordnet. In der ISO 26262 erfolgt die Risikoanalyse mittels einer festgelegten qualitativen Methodik. Dazu muss für jede identifizierte Gefährdung einzeln die Schwere der Auswirkung, die Häufigkeit der Gefahrsituation und die Beherrschbarkeit der Fehlfunktion in der jeweiligen Gefahrsituation, zum Beispiel durch den Fahrer, abgeschätzt werden. Aus einer vorgegebenen Tabelle lässt sich dann für jede Gefährdung die Einstufung als nicht sicherheitsrelevant (QM - Quality Management) oder als Gefährdung einer bestimmten Klasse (ASIL Klasse A - D) ablesen, wobei ASIL für Automotive Safety Integrity Level steht.

Mit steigendem ASIL steigen auch die Anforderungen an die Sicherheit. Nach dem heutigen Stand der Technik gibt es bisher noch kein computerimplementiertes Verfahren, welches gemäß der ISO Norm 26262 in einem sicherheitsrelevanten elektrischen/elektronischen System eines Kraftfahrzeugs, zum Beispiel ein pneumatisches Niveauregelsystem eines Fahrwerksystems, eine ständige Gefährdungsanalyse und Risikoabschätzung des Systems, eine Bewertung des Gefährdungspotenzials gemäß dem Klassifizierungssystem der ISO Norm 26262 vornimmt und automatisch die von dem Prozess-Rahmenwerk und dem Vorgehensmodell der ISO Norm 26262 gelieferten Methoden zur Erfüllung der jeweiligen Sicherheitsanforderung automatisch umsetzt.

Demgegenüber liegt der Erfindung die Aufgabe zugrunde, ein verbessertes Verfahren zur Überwachung und Steuerung eines pneumatischen Niveauregelsystems eines Fahrwerksystems, eine verbesserte Vorrichtung zur Überwachung und Steuerung eines pneumatischen Niveauregelsystems eines Fahrwerksystems sowie ein verbessertes Computerprogrammprodukt zu schaffen.

Die der Erfindung zugrunde liegenden Aufgaben werden jeweils mit den Merkmalen des unabhängigen Patentanspruchs gelöst. Bevorzugte Ausführungsformen der Erfindung sind in den abhängigen Patentansprüchen angegeben.

Es wird ein computerimplementiertes Verfahren zur Überwachung und Steuerung eines pneumatischen Niveauregelsystems eines Fahrwerksystems geschaffen, wobei das Verfahren die Schritte umfasst:
- wiederholte Messung eines aktuellen Niveaus des Fahrwerksystems,
- Erkennung einer Überschreitung von mindestens einem vordefinierten Niveauschwellwert durch das aktuelle Niveau des Fahrwerksystems, wobei dem Niveauschwellwert ein Zeitintervallschwellwert zugeordnet ist,
- wiederholte Messung eines Zeitintervalls, in welchem das aktuelle Niveau des Fahrwerksystems den mindestens einen vordefinierten Niveauschwellwert überschreitet,
- Erkennung einer Überschreitung des dem mindestens einen vordefinierten Niveauschwellwert zugeordneten vordefinierten Zeitintervallschwellwerts durch das gemessene Zeitintervall,
- wiederholte Überprüfung, ob sowohl der mindestens eine Niveauschwellwert als auch der zugeordnete Zeitintervallschwellwert überschritten sind,
- und wenn dies der Fall ist, automatische Auslösung von vordefinierten technischen Maßnahmen, die mindestens dazu geeignet sind, ein weiteres Ansteigen des aktuellen Niveaus des Fahrwerksystems zu verhindern und/oder eine Stabilität des Fahrwerksystems zu erhöhen,
   wobei die technischen Maßnahmen (263, 264, 265), im Falle, dass das aktuelle Niveau (129) des Fahrwerksystems den mindestens einen Niveauschwellwert (267, 268, 269) und den zugeordneten Zeitintervallschwellwert überschreitet, umfassen:
   - eine Zuschaltung von die Stabilität des Fahrwerksystems sichernden Zusatzsystemen in Form von elektronischen Stabilitätsprogrammen (152), und/oder
   - eine regulative Einstellung von Fahrzeugkomponenten zur Reduktion einer Geschwindigkeit (153) des Fahrwerksystems,
- Deaktivierung der automatisch ausgelösten Maßnahmen, wenn die wiederholte Überprüfung ergibt, dass das aktuelle Niveau des Fahrwerksystems den mindestens einen Niveauschwellwert abzüglich einer Hysterese nach Ablauf des zugeordneten Zeitintervallschwellwerts unterschreitet.

Nach Ausführungsformen der Erfindung wird somit ein Überwachungs- und Steuerungsmechanismus zur Identifizierung von Gefahrpotenzialen und zur Risikobewertung von fehlerhaften Niveaueinstellungen eines Fahrwerksystems durch ein pneumatisches Niveauregelsystem bei gleichzeitiger Auslösung von vordefinierten regulativen Gegenmaßnahmen zur Senkung des Sicherheitsrisikos geliefert, das aus einem zu hohen Niveau des Fahrwerksystems resultiert. Das beschriebene Verfahren führt somit gemäß den Anforderungen der ISO 26262 eine wiederholte Gefährdungsanalyse und Risikoabschätzung bezüglich des Niveaus eines Fahrwerksystems aus, wobei vor allem die Situationen als gefährlich eingestuft werden, in denen das Fahrzeug aufgrund eines zu hohen Niveaus als "fahrdynamisch kritisch" bis "unfahrbar" beurteilt wird. Dabei wird als ein deutlich zu hohes Niveau des Fahrwerksystems des Fahrzeugs ein deutlich über dem Verstellbereich liegendes Niveau, bei dem das Fahrzeug ein sehr stark übersteuerndes Fahrverhalten (wenn die Hinterachse deutlich zu hoch steht) bzw. untersteuerndes Fahrverhalten (wenn die Vorderachse deutlich zu hoch steht) zeigt. Während ein untersteuerndes Fahrverhalten zwar im Allgemeinen als nicht so kritisch eingestuft wird, impliziert ein übersteuerndes Fahrverhalten eine hohe Gefährdungsstufe. Ein übersteuerndes Fahrverhalten stellt somit kein vorgesehenes Systemverhalten dar und wurde aufgrund eines Fehlers erreicht.

Gemäß den Regeln eines Qualitätsmanagements wird also eine klassifizierte Fehleranalyse, eine automatische Einleitung von Gegenmaßnahmen, eine messtechnische Evaluation der eingeleiteten Gegenmaßnahmen in sich wiederholender Weise durchgeführt. Dies hat den Vorteil, dass die Anforderungen der ISO Norm 26262 in effizienter Weise erfüllt werden. Durch die Definition von Niveauschwellwerten und Zeitintervallschwellwerten wird ein messbares Kriterium zur quantitativen Bewertung von Sicherheitsrisiken eines elektrischen/elektronischen Systems, in diesem Fall einer pneumatischen Niveauregelvorrichtung eines Fahrzeugs vorgenommen. Der wiederholte Soll-/Ist-Vergleich bezüglich des Niveaus des Fahrwerksystems, die Erkennung von Überschreitungen vordefinierter Niveauschwellwerte und Zeitintervallschwellwerte zur Identifikation von fehlerhaften Niveaueinstellungen, das automatische Einleiten von Maßnahmen, die eine Senkung des Niveaus und/oder eine Erhöhung der Stabilität des Fahrzeugs bewirken, die wiederholte messtechnische Evaluation der eingeleiteten Gegenmaßnahmen und automatische Deaktivierung der ausgelösten Maßnahmen, sobald der Fehler behoben wurde, stellen eine geeignete Realisation aller Phasen (Plan, Do, Check, Act) des von der ISO 26262 geforderten Qualität- und Fehlermanagements dar.

Nach erfolgter Identifizierung eines sicherheitskritischen Niveaus können durch das beschriebene Verfahren unterschiedliche Arten von Gegenmaßnahmen zur Beseitigung oder Reduktion des Sicherheitsrisikos des Fahrwerksystems eingeleitet werden. Bei einer bekannten Sicherheitsgefährdung kann eine Zuschaltung des zuvor durch den Fahrzeugbenutzer deaktivierten Electronic Stability Control-Systems automatisch erzwungen werden. Eine weitere Kategorie von Gegenmaßnahmen betrifft das Motormanagement, wobei zum Beispiel im Gefährdungsfall die Geschwindigkeit automatisch begrenzt wird.

Dies kann den Vorteil haben, dass je nach Einstufung und Höhe der Kritikalität des Sicherheitsrisikos entweder alle Gegenmaßnahmen gleichzeitig, in einer geeigneten Kombination oder einzeln eingeleitet werden können. Die Maßnahmen oder Aktionen, die von dem beschriebenen Überwachungs- und Steuerungsmechanismus getroffen bzw. ausgelöst werden können, sind je nach den Wünschen des Fahrzeugbenutzers projektspezifisch priorisierbar und an das jeweilige Fahrzeugverhalten adaptierbar.

Nach einer Ausführungsform der Erfindung wird bei der wiederholten Messung des aktuellen Niveaus des Fahrwerksystems eine

Frequenzbewertung von gemessenen Höhensignalen durchgeführt, wobei ein Einfluss von fahrdynamischen Größen bei unterschiedlichen Fahrmanövern ausgewertet und/oder ein gewichtsmäßiger Belastungsgrad des Fahrwerksystems berücksichtigt werden.

Dies kann den Vorteil haben, dass bei der Identifizierung einer fehlerhaften Niveaueinstellung nicht nur die gemessene Niveauhöhe als solche allein, sondern auch weitere Einflussgrößen berücksichtigt werden. Bei der Klassifizierung als Sicherheitsrisiko erfolgt eine Auswertung der Frequenz der gemessenen Höhensignale, welche den aktuellen Niveaustand des Fahrwerksystems repräsentieren, unter Berücksichtigung von sich ändernden fahrdynamischen Größen bei unterschiedlichen Fahrmanövern (z.B. konstante Geschwindigkeiten, Verzögerungen, Beschleunigungen, Anfahren, Bremsmanövern, Schaltungen, Geradeausfahrt, Links- und Rechtskurven mit unterschiedlicher Querbeschleunigung), Berücksichtigung der Fahrbahneigenschaften (z.B. glatter Asphalt, Wegasphalt, Kopfstein grob, Kopfstein fein, schlechter Weg, Bordsteinanfahrt) sowie Berücksichtigung des Beladungszustandes des Fahrzeugs (z.B. Fahrer solo, zwei Personen und Gepäck, Vollbeladung, Anhängerbetrieb). Zur Bewertung eines aktuellen Niveaus des Fahrwerksystems bei Überschreitung von gesetzten Niveauschwellwerten wird also nicht nur die Überschreitung von Zeitintervallschwellwerten berücksichtigt, sondern das Fahrzeugverhalten sowie äußere Umstände werden mitberücksichtigt. Dies kann weiterhin den Vorteil haben, dass die Anzahl von fehlerhaften Fehlermeldungen reduziert wird.

Nach einer Ausführungsform der Erfindung wird im Falle eines Absinkens des aktuellen Niveaus des Fahrwerksystems bei einer Bewertung von Frequenzen der gemessenen Höhensignale, ob die gemessenen Höhensignale den vordefinierten Niveauschwellwert (267) unterschreiten, ein Hystereseverhalten der gemessenen Höhensignale berücksichtigt.

Dies kann den Vorteil haben, dass nicht schon bei einer bloßen kurzzeitigen Überschreitung eines Schwellwertes sofort eine Fehlermeldung als Reaktion auf eine Sollabweichung abgesetzt wird, sondern dass in Abhängigkeit von weiteren darauffolgenden Höhensignalen in Abhängigkeit deren Messwertes entschieden werden kann, ob eine eindeutige Überschreitung eines Schwellwertes vorliegt oder nicht. Die Berücksichtigung eines Hystereseverhaltens bei Messung des Höhensignals erlaubt somit eine Eliminierung von Einflüssen durch Regelschwingungen aufgrund zum Beispiel mechanischen Spiels des pneumatorischen Aktuatorensystems oder einer Messungenauigkeit der Höhensensoren. Es kann somit eine verzögerte Reaktion auf eine Sollabweichung des aktuellen Niveaus durch Auswertung weiterer Höhensignale konstruiert werden, was die Rate von Fehlermeldungen zusätzlich reduziert.

Nach einer Ausführungsform der Erfindung umfasst das Verfahren weiter eine wiederholte Überwachung und Identifizierung von Prozessen und Komponenten eines pneumatischen Aktuatorensystems des pneumatischen Niveauregelsystems.

Dies kann den Vorteil haben, dass eine Identifikation eines Sicherheitsrisikos nicht nur anhand einer Messung des pneumatischen Niveaus erfolgt, sondern auch durch die Überwachung des technischen Vorgangs innerhalb der pneumatischen Regelvorrichtung. So kann die Erkennung eines Sicherheitsrisikos zum Beispiel auch durch eine Überwachung der Federbeinposition oder auch durch die Identifizierung eines Regelvorgangs in Richtung eines gefährlichen und hoch kritischen Bereichs zum Beispiel mit Annäherung an den Zuganschlag vorgenommen werden. Zum anderen kann die Überwachung und Identifizierung von Prozessen und Komponenten der pneumatischen Niveauregelvorrichtung, zum Beispiel Erkennung eines Regelvorgangs im Betriebsmodus einer geschlossenen Luftversorgung mittels Identifizierung des Schaltzustandes eines Ventils, zur Fehleranalyse eines über einem Schwellwert liegenden Höhensignals genutzt werden.

Des Weiteren ist die Überwachung und Identifizierung von Prozessen und Komponenten der pneumatischen Regelvorrichtung vorteilhaft für die Identifizierung von geeigneten technischen Maßnahmen zur Beseitigung oder Reduzierung des Sicherheitsrisikos. So kann zum Beispiel durch Identifizierung eines während einer Aufregelung gemäß der pneumatischen Schaltung aktives Ventil ein fälschliches Aufregeln des Fahrwerksystems erkannt und ein weiteres Aufregeln unterbunden werden. Die wiederholte Überwachung und Identifizierung von Prozessen und Komponenten der pneumatischen Regelvorrichtung ermöglicht somit die Identifizierung von Ursachen für eine fehlerhafte Niveaueinstellung. So kann zum Beispiel nach einer Erkennung eines fehlerhaften Aufregelns mittels Identifizierung einer Ventilstellung eine technische Gegenmaßnahme, zum Beispiel Änderung des Schaltzustands des Ventils zur Einleitung des Abregelvorgangs des Fahrwerksystems, durchgeführt werden.

Durch wiederholte Überwachung und Identifizierung von als Gegenmaßen eingeleiteten Prozessen kann auch eine Wiedergutprüfung stattfinden, bei der durch eine Änderung des gemessenen Ruhesignals und durch eine nachvollziehbare veränderte Stellung von Komponenten der pneumatischen Niveauregelvorrichtung eine gleichzeitige Verifikation erfolgen kann. Höhensignalmessungen und wiederholte Überwachung und Identifizierung von Prozessen und Komponenten der pneumatischen Regelvorrichtung ergänzen sich somit bei der Identifizierung und Klassifizierung von Sicherheitsrisiken, bei der Fehleranalyse sowie bei der Einleitung von Gegenmaßnahmen zur Wiederherstellung der funktionalen Sicherheit eines Fahrwerksystems.

Nach einer Ausführungsform der Erfindung umfassen die technischen Maßnahmen, im Falle, dass das aktuelle Niveau des Fahrwerksystems den mindestens einen Niveauschwellwert und den zugeordneten Zeitintervallschwellwert überschreitet:
- eine Steuerung der Prozesse und Komponenten des pneumatischen Aktuatorensystems des pneumatischen Regelsystems.

Nach erfolgter Identifizierung eines sicherheitskritischen Niveaus können durch das beschriebene Verfahren unterschiedliche Arten von Gegenmaßnahmen zur Beseitigung oder Reduktion des Sicherheitsrisikos des Fahrwerksystems eingeleitet werden. So kann zum Beispiel durch eine Deaktivierung des pneumatischen Aktuatorensystems der Aufregelungsvorgang abgebrochen werden. Dies kann den Vorteil haben, dass je nach Einstufung und Höhe der Kritikalität des Sicherheitsrisikos entweder alle Gegenmaßnahmen gleichzeitig, in einer geeigneten Kombination oder einzeln eingeleitet werden können. Die Maßnahmen oder Aktionen, die von dem beschriebenen Überwachungs- und Steuerungsmechanismus getroffen bzw. ausgelöst werden können, sind je nach den Wünschen des Fahrzeugbenutzers projektspezifisch priorisierbar und an das jeweilige Fahrzeugverhalten adaptierbar.

Nach einer Ausführungsform der Erfindung umfasst das Verfahren weiterhin eine Auswertung der eingeleiteten technischen Maßnahmen.

Dies hat den Vorteil, dass nicht nur den Anforderungen der ISO Norm 26262 hinsichtlich wiederholter Evaluation von Maßnahmen Genüge getan wird, sondern dass auch technische Maßnahmen, die eventuell die Fahrqualität des Fahrzeugs negativ beeinflussen, wieder rückgängig gemacht werden, nachdem das Sicherheitsrisiko beseitigt wurde.

Nach einer Ausführungsform der Erfindung werden bei Überschreitung des mindestens einen Niveauschwellwerts und des zugeordneten Zeitintervallschwellwerts vordefinierte Fehlereinträge zur Protokollierung und/oder zur Fehlerdiagnose gesetzt.

Dies kann den Vorteil haben, dass zum Beispiel anhand von gesetzten Fehlercodes eine Fehlerdiagnose beschleunigt wird, eine Protokollierung und Historisierung von aufgetretenen Fehlern ermöglicht wird und/oder auch automatisch fehlercodebasierte Notläufe gestartet werden.

Nach einer Ausführungsform der Erfindung werden bei Überschreitung des mindestens einen Niveauschwellwerts und des zugeordneten Zeitintervallschwellwerts vordefinierte Warnstufen zur Klassifizierung dieser Überschreitung gesetzt, wobei in Abhängigkeit von den Warnstufen mindestens eine von dem vordefinierten technischen Maßnahmen eingeleitet wird, die dazu geeignet ist, das aktuelle Niveau des Fahrwerksystems unter den mindestens einen Niveauschwellwert zu senken und/oder eine Stabilität des Fahrwerksystems zu erhöhen.

Die Definition von unterschiedlichen Warnstufen und eine Zuordnung von identifizierten fehlerhaften Niveaueinstellungen realisiert die von der ISO Norm 26262 geforderte Klassifizierung des Sicherheitsrisikos zum Beispiel in die ASIL-Klassen A bis D. Gleichzeitig können in Abhängigkeit des Schweregrades der Sicherheitsgefahrenstufe geeignete technische Maßnahmen zur Senkung des Niveaus des Fahrwerksystems und/oder zur Erhöhung der Stabilität des Fahrwerksystems eingeleitet werden. Die beschriebene Erfindung beinhaltet somit die von der ISO Norm 26262 geforderten Regeln zur ASIL-Dekomposition sowie Regeln zur Kritikalitätsanalyse. Eine mögliche Ausführungsform des Setzens unterschiedlicher Warnstufen kann zum Beispiel auch durch unterschiedliche akustische Signale und/oder in unterschiedlichen Farben leuchtenden Warnlampen technisch umgesetzt werden.

Nach einer Ausführungsform der Erfindung werden bei Überschreitung des mindestens einen Niveauschwellwerts und des zugeordneten Zeitintervallschwellwerts mindestens ein Informationssignal und/oder mindestens ein Kommando an weitere definierbare Schnittstellen gesendet, die dazu geeignet sind, Maßnahmen zur Senkung des aktuellen Niveaus und/oder zur Erhöhung der Stabilität des Fahrwerksystems einzuleiten.

Dies kann den Vorteil haben, dass die Identifikation einer fehlerhaften Niveaueinstellung eines Fahrwerksystems über beliebig definierbare Schnittstellen hinweg in andere Teile einer bestehenden Softwarearchitektur mittels eines Informationssignals (zum Beispiel akustisches Signal oder gelbe Warnlampe) und/oder eines Kommandos zur Einleitung von Gegenmaßnahmen, die durch externe Softwarekomponenten gesteuert werden, möglich ist. So können zum Beispiel in einem Kombiinstrument dem Fahrzeugbenutzer spezifische Anweisungen zur manuellen Einleitung von Gegenmaßnahmen gegeben werden. Gleichzeitig kann der Fahrzeugbenutzer durch gesendete Textmitteilungen zu jeder Maßnahme zeitnah Informationen erhalten.

Durch derart weitere definierbaren Schnittstellen könnten Informationen hinsichtlich der Identifizierung von Fehlern der Niveaueinstellung und/oder eingeleiteten Maßnahmen an andere Systeme des Fahrzeugs kommuniziert werden, wodurch eine Koordination der verschiedenen Systeme des Fahrzeugs ermöglicht würde. Gleichzeitig könnte eine Schnittstellenkompatibilität der beschriebenen Erfindung die Kapselung des in einem Algorithmus ausgeprägten Verfahrens in einer speziellen Sicherheitssoftware ermöglichen, die zum Beispiel parallel zur reinen Funktionssoftware schaltbar wäre und keinerlei Querverbindung zur sonstigen Umgebungssoftware aufwiese. So würde gleichzeitig die Möglichkeit geschaffen, bereits bestehende Softwareteile einer Softwarearchitektur in einem Fahrzeug zu erhalten bzw. auch auszutauschen, ohne die sicherheitsrelevante Funktionalität ändern zu müssen. Gleichzeitig könnte durch eine parallele Anordnung und Kapselung der Sicherheitssoftware diese mit wenig Aufwand umfassender, qualifiziert und effizienter getestet werden als es eine Qualifizierung und Testung der gesamten Software jemals zuließe.

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung eine Kontrollvorrichtung zur Überwachung und Steuerung eines pneumatischen Regelsystems eines Fahrwerksystems mit:
- Mitteln zur wiederholten Messung eines aktuellen Niveaus des Fahrwerksystems,
- Mitteln zur Erkennung einer Überschreitung von mindestens einem vordefinierten Niveauschwellwert durch das aktuelle Niveau des Fahrwerksystems,
   wobei dem Niveauschwellwert ein Zeitintervallschwellwert zugeordnet ist,
- Mitteln zur wiederholten Messung eines Zeitintervalls, in welchem das aktuelle Niveau des Fahrwerksystems mindestens den einen vordefinierten Niveauschwellwert überschreitet,
- Mitteln zur Erkennung einer Überschreitung des den mindestens einen vordefinierten Niveauschwellwerts zugeordneten vordefinierten Zeitintervallschwellwerts durch das Zeitintervall,
- Mitteln zur wiederholten Überprüfung, ob sowohl der mindestens eine Niveauschwellwert als auch der zugeordnete Zeitintervallschwellwert überschritten sind,
- Mitteln zur automatischen Auslösung von vordefinierten technischen Maßnahmen, die dazu geeignet sind, das aktuelle Niveau des Fahrwerksystems unter den mindestens einen Niveauschwellwert zu senken und/oder eine Stabilität des Fahrwerksystems zu erhöhen, wenn sowohl der mindestens eine Niveauschwellwert als auch der zugeordnete Zeitintervallschwellwert überschritten sind,
   wobei die technischen Maßnahmen (263, 264, 265) umfassen:
   - eine Zwangszuschaltung eines elektronischen Stabilitätsprogramms (152), und/oder
   - eine Geschwindigkeitsbegrenzung (153);
- Mitteln zur Deaktivierung der automatisch ausgelösten Maßnahmen, wenn die Überprüfung ergibt, dass das aktuelle Niveau des Fahrwerksystems den mindestens einen Niveauschwellwert abzüglich einer Hysterese nach Ablauf des zugeordneten Zeitintervallschwellwerts unterschreitet.

Im Folgenden sind bevorzugte Ausführungsformen der Erfindung anhand der folgenden Zeichnungen näher erläutert. Es zeigen:
- Figur 1: Blockdiagramm zur Veranschaulichung der Software-Architektur mit eingebetteter Sicherheitssoftware zur Überwachung und Steuerung eines pneumatischen Niveauregelsystems eines Fahrwerksystems,
- Figur 2: Höhensignalverlauf bei fehlerhafter Aufregelung mit Darstellung von definierten Warnschwellen,
- Figur 3: Flussdiagramm zur Veranschaulichung der Aktivierung der einzelnen Warnstufen.

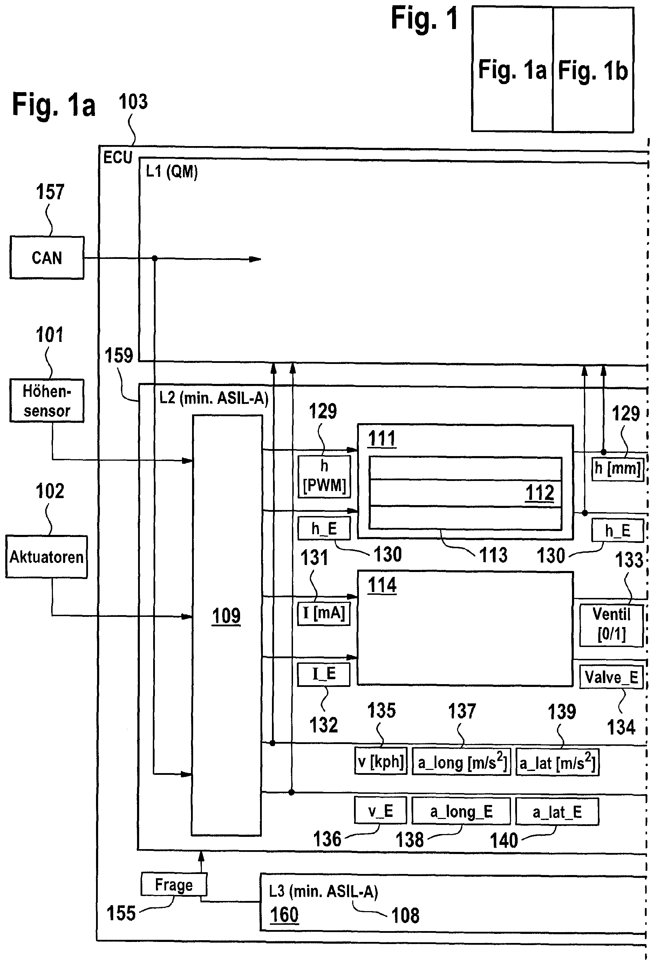

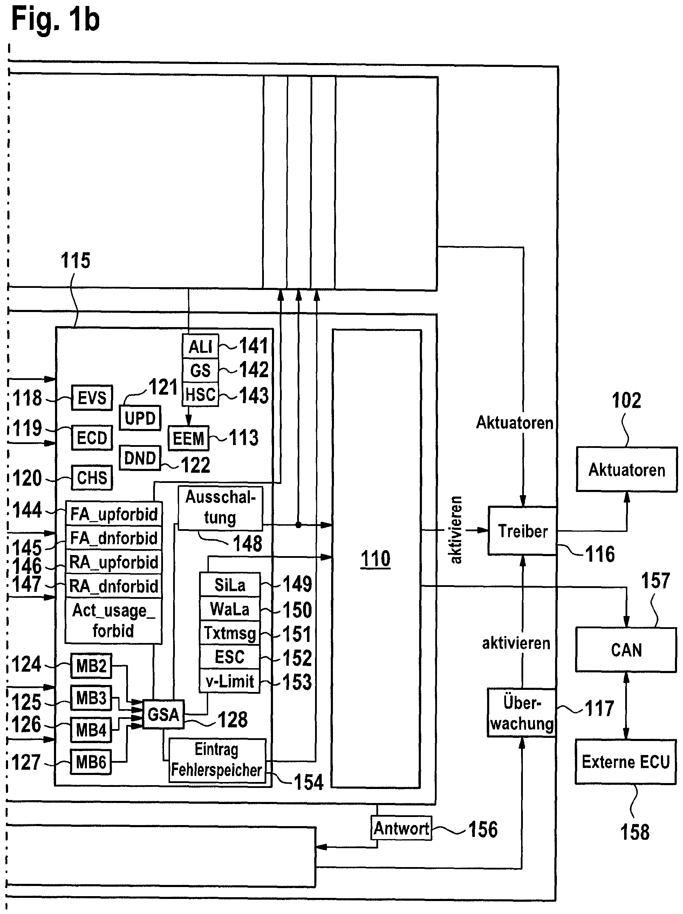

Die Figur 1 zeigt ein Blockdiagramm zur Veranschaulichung der Schnittstellen der Sicherheitssoftware 115 zum pneumatischen Aktuatorensystem *[Actuators]* 102 über eine Eingangsstelle *[ASIL Input Interface]* 109 und einen Ventilschaltzustand-Auswertungsmodul *[Functionality: Valve State Processing Unit]* 114, sowie zu den Höhensensoren *[Height Sensors]* 101 über die ASIL-Eingangsstelle *[ASIL Input Interface]* 109 nach einer Puls-Weiten-Modulation *[Conversion PWM to Height]* in dem Funktionalitätsmodul 111. Dabei stellt ein Feldbussystem *[CAN]* 157 eine Schnittstelle sowohl zum Einstufungslevel *[L1 (QM)]* 107 der elektronischen Kontrolleinheit *[ECU]* 103 als auch zum Einstufungslevel *[L2 (min. ASIL-A)]* 159 mit mindestens einer Einstufung des Sicherheitsrisikos in die Klasse ASIL-A *[L3 (min. ASIL-A)]* 108.

Dargestellt sind die Funktionalitäten der elektronischen Steuereinheit *[ECU]* 103 in Abhängigkeit von der Einstufung des Sicherheitsrisikos im Falle der Einstufung als "nicht sicherheitsrelevant" mit Einstufungslevel QM *[L1 (QM)]* 107, bei Einstufung des Sicherheitsrisikos in mindestens die Klasse ASIL-A mit Einstufungslevel *[L2 (min. ASIL-A)]* 159 und anschließender Auswertung einer Gegenmaßnahme in Form einer Auswertung einer Antwort *[Question]* 156 mit Lieferung einer an die ASIL-Eingangs-Schnittstelle *[ASIL Input Interface]* 109 gerichtete Frage [Question] 155.

Die Höhensensoren *[Height Sensors]* 101 senden über die ASIL-Eingangs-Schnittstelle *[ASIL Input Interface]* 109 Informationen bezüglich der gemessenen Höhe des Niveaus des Fahrwerksystems an das Übersetzungsmodul 111, indem eine Puls-Weiten-Modulation *[Conversion PWM to Height],* eine Sensororientierung *[Sensor Orientation]* mittels einer Sensorverbaulage 112 und eine Kalibrierung *[Height Sensor Calibration]* 113 der Höhensensoren [Height Sensors] 101 stattfindet. Die Puls-Weitenmodulierte Höhenangabe[ h [mm]] wird in Schritt 129 an die Sicherheitssoftware mit Safety Monitor 115 unter gleichzeitiger Vermittlung eines Fehlerstatus [*h*_*E*] 130 der Höhen weitergegeben.

Aus dem pneumatischen Aktuatorensystem *[Actuators]* 102 wird über die ASIL-Eingangs-Schnittstelle *[ASIL Input Interface]* 109 eine Information über den Strom [I *[mA]]* 131 und den Fehlerstatus *[I*_*E]* 132 des Stroms an das Ventilschaltzustand-Auswertungsmodul *[Functionality: Valve State Processing Unit]* 114 geschickt. Ausgehend von dem Ventilschaltzustand-Auswertungsmodul *[Functionality: Valve State Processing Unit]* 114 wird eine Information bezüglich des Ventilschaltzustandes *[Valve [0*/*1]]* 133 und bezüglich des Fehlerstatus *[Valve-E]* 134 des Ventils an die Sicherheitssoftware mit Safety Monitor 115 geschickt.

In dem Sicherheitsmodul *[Functionality: Safety Monitor]* 115 findet im Schritt *[EVS]* 118 eine Auswertung des Ventilzustandes, im Schritt *[ECD]* 119 eine Auswertung der Fahrzeugdynamik, im Schritt *[CHS]* 120 eine Konditionierung der Höhensignale, im Schritt *[UPD]* 121 eine Aufregelungserkennung und im Schritt *[DND]* 122 eine Abregelungserkennung statt.

Über die ASIL-Eingangs-Schnittstelle *[ASIL Input Interface]* 109 werden auch Informationen bezüglich der Fahrzeuggeschwindigkeit *[v [kph]]* 135, bezüglich des Fehlerstatus *[v_E]* 136 der Fahrzeuggeschwindigkeit, bezüglich der Längsbeschleunigung *[a_long [m*/*s²]]* 137, bezüglich des Fehlerstatus *[a_long_E]* 138 der Längsbeschleunigung, bezüglich der Querbeschleunigung *[a_lat [m*/*s²]]* 139 und bezüglich des Fehlerstatus *[a_lat_E]* 140 der Querbeschleunigung an das Sicherheitsmodul *[Functionality: Safety Monitor]* 115 mit Safety Monitor 115 geschickt.

Bei Vorliegen einer Fehlfunktion *[MB2]* 124, *[MB3]* 125, *[M42]* 126 und/oder *[MB6]* 127 erfolgt über das Modul zur Generierung von Sicherheitsaktionen [GSA] 128 eine Setzung von Fehlerspeichereinträgen *[FaultEntries]* 154, das Absetzen eines Kommandos zum Aufregelverbot der Vorderachse *[FA_upforbid]* 144, eines Kommandos zum Aufregelverbot der Hinterachse *[FA_dnforbid]* 145, ein Kommando zum Abregelverbot der Vorderachse *[RA_upforbid]* 146, ein Kommando zum Abregelverbot der Hinterachse *[RA_dnforbid]* 147, eine Ausschaltung *[SwitchOFF]* 148, eine Auslösung von Blinken einer Signallampe *[SiLa]* 149, eine Aktivierung einer Warnlampe *[WaLa]* 150, ein Absetzen einer Textnachricht *[Txtmsg]* 151, eine Zwangszuschaltung eines elektronischen Stabilitätsprogramms *[ESC]* 152, und/oder eine Geschwindigkeitsbegrenzung *[FaultEntries]* 153.

Das Kommando zur Ausschaltung 148 gelangt über die ASIL-Eingangs-Schnittstelle *[ASIL Output Interface]* 110 über einen Treiberbaustein *[Driver]* 116 zum pneumatischen Aktuatorensystem *[Actuators]* 102, was eine Ausschaltung des pneumatischen Aktuatorensystems *[Actuators]* 102 bedeutet. Das Kommando zur Aktivierung einer Signallampe *[SiLa]* 149, zur Aktivierung einer Warnlampe *[WaLa]* 150, zum Absetzen einer Textnachricht *[Txtmsg]* 151, zur Zwangszuschaltung eines elektronischen Stabilitätsprogramms *[ESC]* 152 und zur Geschwindigkeitsbegrenzung *[v-Limit]* 153 gelangt über die ASIL-Ausgangs-Schnittstelle *[ASIL Output Interface]* 110 zum Feldbussystem [CAN] 157, welches unter anderem mit einer externen Control-Network-Einheit zur Motorsteuerung *[External ECU]* 158 in Verbindung steht. Das Sicherheitsmodul *[Functionality: Safety Monitor]* 115 kann somit durch Absetzen eines Kommandos zur Geschwindigkeitsbegrenzung andere Hardwarekomponenten des Fahrzeugs dazu bewegen, aktiv Motormanagement zu betreiben. Ein Überwachungsbaustein *[WatchDog]* 117 überwacht den Treiberbaustein *[Driver]* 116, der eine Manipulation des pneumatischen Aktuatorensystems *[Actuators]* 102 bewirken kann.

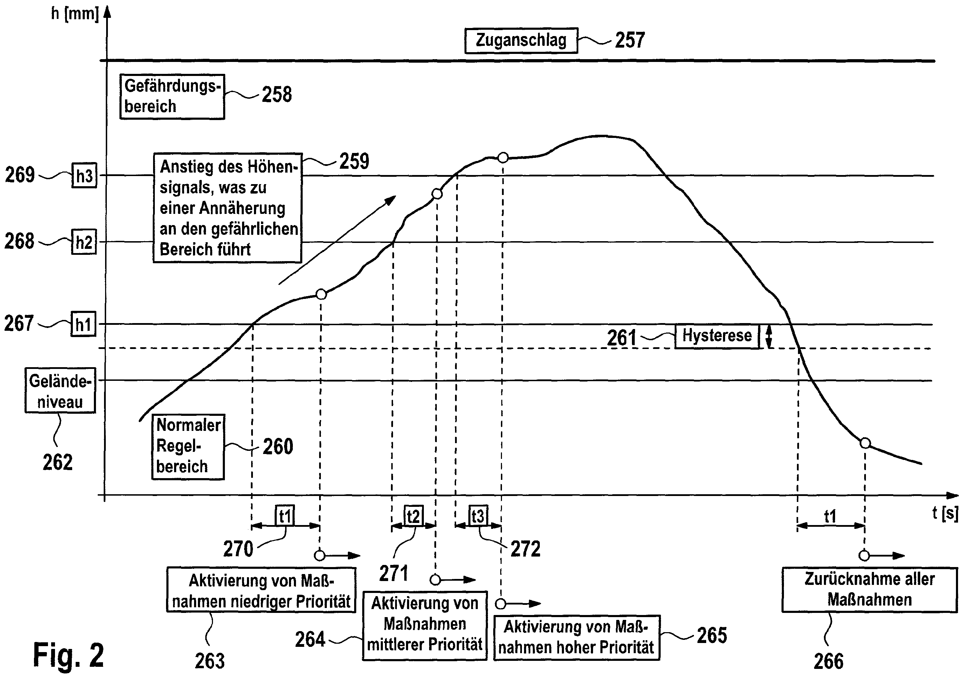

Figur 2 zeigt einen beispielhaften Höhensignalverlauf für ein Fahrwerkselement mit den designierten Warnstufen *h1, h2* und *h3* 267, 268, 269 mit den jeweils zugeordneten Zeitintervallschwellwerten *t1,* t2 und t3 270, 271, 272. Der dargestellte Verlauf des gemessenen Höhensignals könnte in seinem linken Teilbereich beispielsweise eine fehlerhafte Aufregelung mit nacheinander folgender Überschreitung der ersten Warnstufe *h1* 267, der zweiten Warnstufe h2 268 und der dritten Warnstufe h3 269 mit jeweiligem Überschreiten der zugeordneten Zeitintervallschwellwerte *t1,* t2 und t3 270, 271, 272 darstellen.

Dabei durchläuft die Höhensignalkurve verschiedene Zonen. Ganz links verläuft die Höhensignalkurve innerhalb des normalen Regelbereichs 260, der nach oben durch das Geländeniveau *[Offroad level]* 262 begrenzt wird. Dabei ist Geländeniveau hier ein Synonym für das höchste regulär einstellbare Fahrwerksniveau. Bis zu dieser Grenze erfolgen reguläre Niveauverstellungen im Rahmen des implementierten Regelkonzepts. An das Geländeniveau *[Offroad level]* 262 schließt sich nach oben eine Zone an, in der ein eventuelles Hystereseverhalten des Höhensignals berücksichtigt wird. Dabei wird das Hystereseverhalten grundsätzlich nur bei Deaktivierung, d.h. Unterschreitung des Höhensignals von [h1-hysterese] genutzt. Bei Aktivierung (Überschreitung der unterschiedlichen Schwellenhöhen) wird höhenseitig keine Hysterese berücksichtigt. Im linken Bereich der Höhensignalverlaufskurve liegt auch der gemessene Höhensignalwert nach Ablauf des Zeitintervalls *t1* 270 deutlich über der Warnstufe *h1* 267, so dass eine Klassifizierung des Niveaus des Fahrwerksystems als gefährdend eingestuft wird und entsprechende Gegenmaßnahmen 263 *[Activate Low Priority Measures]* eingeleitet werden.

Gemäß dem dargestellten Höhensignalverlauf scheinen diese eingeleiteten Gegenmaßnahmen jedoch keine Senkung des aktuellen Niveaus des Fahrwerksystems zu erreichen, so dass im Teilbereich *[Rising up of the Height Signal leads to the Approach of the Hazardous Range]* 259 des Höhensignalverlaufs das Höhensignal weiter ansteigt und zu einer Annäherung an den gefährlichen Bereich 258 *[Hazardous Range]* führt. Dabei wird im dargestellten Höhensignalverlauf die Warnstufe h2 268 während des zugeordneten Zeitintervallschwellwerts t2 271 überschritten, so dass automatisch weitere Gegenmaßnahmen mittlerer Priorität 264 *[Activate Middle Priority Measures]* eingeleitet werden.

Gemäß dem dargestellten Höhensignalverlauf scheinen auch diese eingeleiteten Gegenmaßnahmen mittlerer Priorität ein weiteres Ansteigen des aktuellen Niveaus des Fahrwerksystems jedoch nicht unterbinden zu können, was durch Überschreitung der Warnstufe h3 bei deutlicher Überschreitung des zugeordneten Zeitintervalls t3 272 ersichtlich wird. Daraufhin werden automatisch weitere Gegenmaßnahmen höherer Priorität 265 *[Activate High Priority Measures]* eingeleitet.

Gemäß dem rechten Teil der dargestellten Höhensignalverlaufskurve fällt die Kurve zur Darstellung des gemessenen Höhensignals nun kontinuierlich ab. Ursachen für das Absinken des Niveaus können dabei z.B. sein: ein Luftverlust, eine Abregelaktivität durch normale Niveauregler (nicht durch die Sicherheitssoftware), eine Niveauabsenkung durch eine fallende Temperatur, etc.. Im fallenden Teil der Höhensignalverlaufskurve wird die Zone durchlaufen, in der ein Hystereseverhalten des Höhensignals berücksichtigt wird. Da das nach Ablauf des Zeitintervalls *t1* aufgenommene Höhensignal eindeutig unter der Warnstufe *h1*267 liegt, wird das aktuelle Niveau des Fahrwerksystems als nicht mehr sicherheitsgefährend eingestuft. Alle eingeleiteten Maßnahmen werden nun in Schritt 266 [Canceling all Measures] gestoppt. Die eingeleiteten Gegenmaßnahmen zur Behebung einer fehlerhaften Aufregelung des Fahrwerksystems durch eine pneumatische Regelvorrichtung konnten verhindern, dass das gemessene Höhensignal die kritische Zone im Bereich des Zuganschlags *[Rebound Stop]* 257 erreichte. Der Zuganschlag selbst begrenzt das geometrische Ausfedervermögen, d.h. es gibt keine Höhenwerte jenseits des Zuganschlags.

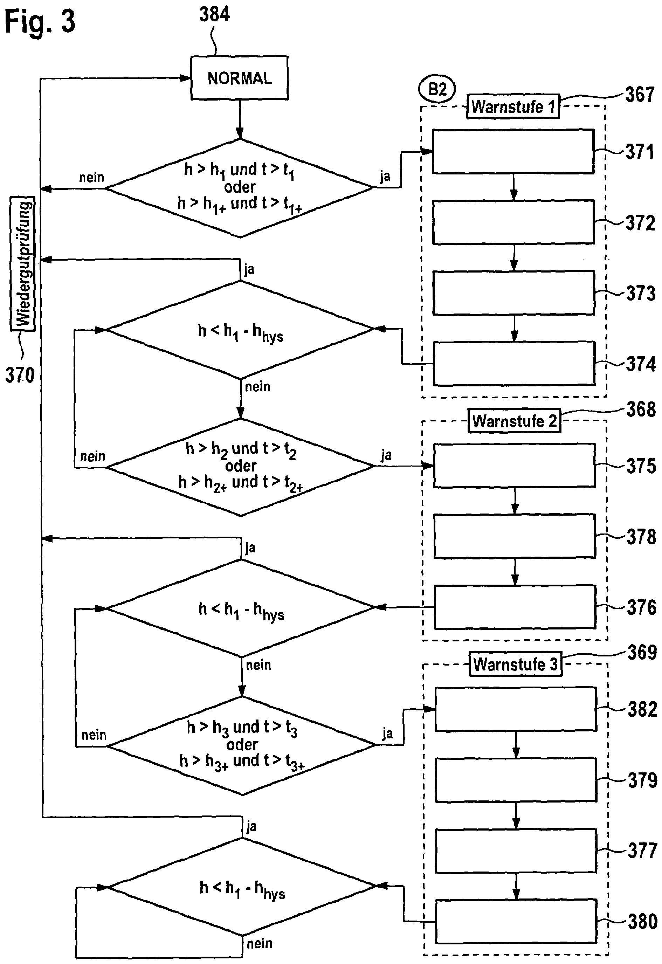

Die Figur 3 zeigt ein Flussdiagramm zur Demonstration der Systematik bezüglich des ständig wiederholten Soll-Ist-Abgleichs zwischen gemessenem Höhensignal mit vordefinierten Niveauschwellwerten bei gleichzeitiger Überschreitung von vordefinierten Zeitintervallschwellwerten, die Klassifizierung des gemessenen Höhensignals in unterschiedliche Risikoklassen und die fahrtabhängige Aktivierung von Gegenmaßnahmen zur Beseitigung des Sicherheitsrisikos.

Als Normalzustand *[NORMAL]* 384 (/*State0*/) wird dabei ein Zustand bezeichnet, in dem kein Abbruch der Aufregelung, keine Ausgabe oder kein Senden der Geschwindigkeitsbegrenzung, keine Anzeige im Kombiinstrument, kein Fehlerspeichereintrag abgesetzt wird, und keine Prio1- oder Prio2-Warnung vorliegt.

Hat ein Soll-Ist-Vergleich zwischen gemessenem Höhensignal und vordefinierter Warnstufe *h1* 267 bei gleichzeitiger Überschreitung des Zeitintervalls *t1* 270 ergeben, dass das Höhensignal eindeutig die Warnstufe *h1* 367 überschritten hat, so wird in Schritt *[Abort Up levelling]* 371 ein Abbruch der Aufregelung aktiviert bei gleichzeitigem Absetzen eines Info-Fehlerspeichereintrags *[Fault-Entry Info]* 372 und Zwangszuschaltung eines elektronischen Stabilitätsprogramms *[ESC reenabling]* 373.

Nach Zurücknahme der Niveaureglerverbote in Schritt *[Reset Level Control Forbid]* 374 wird unter Berücksichtigung einer Hysterse H_{hys} das Höhensignal nochmals gemessen und mit der Warnstufe h1 verglichen. Dabei ist die Rücknahme des Niveauregelverbots für Elektrofahrzeuge vorgesehen, die beispielsweise bei geringer Akku-Ladung die Fahrzeugsysteme zwangsweise abschalten. Hat die Logik eines Elektrofahrzeugs den Niveauregler abgeschaltet, muss dieses Verbot im Fehlerfall zurückgenommen werden, damit das System (zumindest für kurze Zeit) die Möglichkeit erhält, mit Hilfe des normalen Niveaureglers das Niveau zu korrigieren. Hat das System mit der QM-Software den gefährlichen Bereich verlassen, kann die Niveuaregelung wiederum aufgrund der eingeschränkten Restenergie deaktiviert werden.

Ergibt die Auswertung der eingeleiteten Maßnahmen, dass das Niveau des Fahrwerksystems eindeutig unterhalb der Warnstufe h1 liegt, so erfolgt eine Wiedergutprüfung *[*/* *Proofed good* */*]* 370.

Ergibt die Auswertung der eingeleiteten Maßnahmen jedoch, dass die eingeleiteten Maßnahmen keine Senkung des Niveaus des Fahrwerksystems bewirkt haben, sondern stattdessen das Höhensignal sogar die Warnstufe h2 überschritten hat bei gleichzeitiger Überschreitung des Zeitintervallschwellwertes t2, so werden bei Vorliegen der Warnstufe 368 in Schritt *[Prio2-Warning]* 375 eine Prio2-Warnung abgesetzt, in Schritt *[Fault-Entry Low Prio]* 378 ein Fehlerspeichereintrag mit niedriger Priorität vorgenommen und diese Warnungen in Schritt *[Dashboard Msg.]* 376 im Kombiinstrument sichtbar für den Fahrzeugbenutzer angezeigt.

Ergibt die nachfolgende Auswertung der eingeleiteten Maßnahmen unter Berücksichtigung einer Hysterese H_{hys}, dass das aktuell gemessene Höhensignal eindeutig unterhalb der Warnstufe h1 (h < [h1-hysterese]) liegt, so erfolgt eine Wiedergutprüfung *[*/* *Proofed good* */*]* 370.

Ergibt die Auswertung der eingeleiteten Maßnahmen jedoch, dass das Höhensignal weiter angestiegen ist und sogar die Warnstufe h3 bei gleichzeitiger Überschreitung des Zeitintervalls t3 überschritten hat, so liegt die Warnstufe 3 369 vor und es werden folgende Gegenmaßnahmen automatisch eingeleitet: in Schritt *[Reset Prio2-Warning]* 382 erfolgt eine Rücknahme der Prio2-Warnung, welche ersetzt wird durch eine Prio1-Warnung in Schritt 379 *[Prio1-Warning].* Es erfolgt weiterhin ein Fehlerspeichereintrag hoher Priorität in Schritt *[Fault-Entry High Prio]* 377 und in Schritt *[Transmit Speed Limit]* 380 wird zudem eine stabilitätserhöhende Maßnahme, nämlich das Absetzen eines Kommandos zur Geschwindigkeitsbegrenzung, abgesetzt.

Nachfolgend werden die eingeleiteten Gegenmaßnahmen wiederum durch einen Soll-Ist-Vergleich und unter Berücksichtigung einer Hysterese H_{hys} bewertet. Ergibt die Auswertung, dass das Niveau des Fahrwerksystems eindeutig unter der Warnstufe h1 (h < [h1-hysterese]) liegt, so erfolgt eine Wiedergutprüfung *[*/* *Proofed good* */*]* 370. Alle Gegenmaßnahmen werden gestoppt.

Ergibt die Bewertung der eingeleiteten Maßnahmen jedoch, dass das Niveau des Fahrwerksystems nicht unter die Warnstufe h1 (h < [h1-hysterese]) gesenkt wurde, so bleiben die eingeleiteten Gegenmaßnahmen weiter aktiv. Es erfolgt eine wiederholte Auswertung der eingeleiteten Gegenmaßnahmen durch Soll-Ist-Vergleich unter Berücksichtigung einer Hysterese.

Die in dem Flussdiagramm dargestellten Prozesse werden ständig wiederholt. Die in Figur 3 dargestellten Verfahrensschritte korrespondieren mit dem in Figur 2 dargestellten Verlauf eines gemessenen Höhensignals. Die in Figur 3 dargestellten Verfahrensschritte könnten somit repräsentativ sein für das Beseitigen einer fehlerhaften Aufregelung eines Fahrwerksystems durch Einleitung von geeigneten Gegenmaßnahmen, die in Abhängigkeit von der jeweils überschrittenen Warnstufe von dem beschriebenen Kontroll- und Steuerungsmechanismus aktiviert werden könnten.

### Bezugszeichenliste

- 101: Höhensensoren
- 102: Aktuatoren
- 103: elektronische Steuereinheit
- 104: QM (Quality Management)
- 108: ASIL-A (Automotive Safety Integration Level A) (Begriff aus der gesetzlichen Norm ISO 26262)
- 109: Eingangs-Schnittstelle
- 110: Ausgangs-Schnittstelle
- 111: Puls-Weiten-Modulation
- 112: Sensorverbaulage
- 113: Kalibrierung der Höhensensoren
- 114: Ventilschaltzustand-Auswertungsmodul
- 115: Funktionalität Überwachung und Steuerung im "Safety Monitor"
- 116: Treiber(baustein)
- 117: Überwachung(sbaustein)
- 118: Auswertung des Ventilzustands
- 119: Auswertung der Fahrzeugdynamik
- 120: Konditionierung der Höhensignale
- 121: Aufregelungserkennung
- 122: Abregelungserkennung
- 123: Auswertung des Steuergerät-Betriebsmodus
- 124: Fehlfunktion B2
- 125: Fehlfunktion B3
- 126: Fehlfunktion B4
- 127: Fehlfunktion B6
- 128: Generierung von Sicherheitsaktionen
- 129: Höhen
- 130: Fehlerstatus der Höhen
- 131: Strom (I)
- 132: Fehlerstatus des Stroms
- 133: Ventil
- 134: Fehlerstatus des Ventils
- 135: (Fahrzeug)Geschwindigkeit
- 136: Fehlerstatus der Fahrzeuggeschwindigkeit
- 137: Längsbeschleunigung
- 138: Fehlerstatus der Längsbeschleunigung
- 139: Querbeschleunigung
- 140: Fehlerstatus der Querbeschleunigung
- 141: Bandende-Initialisierung
- 142: Werkstattmodus
- 143: Höhensensor-Kalibrierung
- 144: Aufregelverbot der Vorderachse
- 145: Aufregelverbot der Hinterachse
- 146: Abregelverbot der Vorderachse
- 147: Abregelverbot der Hinterachse
- 148: Ausschaltung
- 149: Signallampe
- 150: Warnlampe
- 151: Textnachricht
- 152: elektronisches Stabilitätsprogramm
- 153: Geschwindigkeitsbegrenzung
- 154: Fehlerspeichereintrag
- 155: Frage
- 156: Antwort
- 157: Feldbus
- 158: externe Kontrolleinheit zur Motorsteuerung
- 159, 160: Einstufungslevel
- 257: Zuganschlag
- 258: Gefährdungsbereich
- 259: Anstieg des Höhensignals, was zu einer Annäherung an den gefährlichen Bereich führt
- 260: normaler Regelbereich
- 261: Hysterese
- 262: Geländeniveau
- 263: Aktivierung von Maßnahmen niedriger Priorität
- 264: Aktivierung von Maßnahmen mittlerer Priorität
- 265: Aktivierung von Maßnahmen hoher Priorität
- 266: Zurücknahme aller Maßnahmen
- 267, 268, 269: Niveauschwellwerte h₁, h₂, h₃
- 270, 271, 272: Zeitintervallschwellwerte t₁, t₂, t₃
- 367: Warnstufe 1
- 368: Warnstufe 2
- 369: Warnstufe 3
- 370: Wiedergutprüfung
- 371: Abbruch der Aufregelung
- 372: Info-Fehlerspeichereintrag
- 373: Zwangszuschaltung des elektronischen Stabilitätsprogramms
- 374: Zurücknahme der Niveauregelungsverbote
- 375: Prio2-Warnung
- 376: Anzeige im Kombiinstrument
- 377: Fehlerspeichereintrag hoher Priorität
- 378: Fehlerspeichereintrag niedriger Priorität
- 379: Prio1-Warnung
- 380: Ausgabe oder Senden der Geschwindigkeitsbegrenzung
- 382: Rücknahme der Prio2-Warnung
- 384: Normalzustand

## Patentansprüche

1. Verfahren zur Überwachung und Steuerung eines pneumatischen Niveauregelsystems eines Fahrwerksystems, wobei das Verfahren die Schritte umfasst:
- Wiederholte Messung eines aktuellen Niveaus (129) des Fahrwerksystems,
- Erkennung einer Überschreitung von mindestens einem vordefinierten Niveauschwellwert (267, 268, 269) durch das aktuelle Niveau (129) des Fahrwerksystems, wobei dem mindestens einem Niveauschwellwert (267, 268, 269) ein Zeitintervallschwellwert (270, 271, 272) zugeordnet ist,
- Wiederholte Messung eines Zeitintervalls, in welchem das aktuelle Niveau (129) des Fahrwerksystems den mindestens einen vordefinierten Niveauschwellwert (267, 268, 269) überschreitet,
- Erkennung einer Überschreitung des dem mindestens einen vordefinierten Niveauschwellwert (267, 268, 269) zugeordneten vordefinierten Zeitintervallschwellwerts (270, 271, 272) durch das gemessene Zeitintervall;
- Wiederholte Überprüfung, ob sowohl der mindestens eine Niveauschwellwert (267, 268, 269) als auch der zugeordnete Zeitintervallschwellwert (270, 271, 272) überschritten sind,
- und wenn dies der Fall ist, Automatische Auslösung (128) von vordefinierten technischen Maßnahmen (263, 264, 265), die mindestens dazu geeignet sind, ein weiteres Ansteigen des aktuellen Niveaus (129) des Fahrwerksystems zu verhindern und/oder eine Stabilität des Fahrwerksystems zu erhöhen (152, 153), **dadurch gekennzeichnet, dass** die technischen Maßnahmen (263, 264, 265), im Falle, dass das aktuelle Niveau (129) des Fahrwerksystems den mindestens einen Niveauschwellwert (267, 268, 269) und den zugeordneten Zeitintervallschwellwert überschreitet, umfassen:
- eine Zuschaltung von die Stabilität des Fahrwerksystems sichernden Zusatzsystemen in Form von elektronischen Stabilitätsprogrammen (152), und/oder
- eine regulative Einstellung von Fahrzeugkomponenten zur Reduktion einer Geschwindigkeit (153) des Fahrwerksystems,
- Deaktivierung (266) der automatisch ausgelösten Maßnahmen (263, 264, 265), wenn die wiederholte Überprüfung ergibt, dass das aktuelle Niveau (129) des Fahrwerksystems den mindestens einen Niveauschwellwert (267) abzüglich einer Hysterese (261) nach Ablauf des zugeordneten Zeitintervallschwellwerts unterschreitet.

2. Verfahren nach Anspruch 1, wobei bei der wiederholten Messung des aktuellen Niveaus (129) des Fahrwerksystems eine Frequenzbewertung (111) von gemessenen Höhensignalen (129) durchgeführt wird, wobei ein Einfluss von fahrdynamischen Größen bei unterschiedlichen Fahrmanövern ausgewertet (135, 137, 139, 119) und/oder ein gewichtsmäßiger Belastungsgrad (120) des Fahrwerksystems berücksichtigt werden.

3. Verfahren nach Anspruch 2, wobei im Falle eines Absinkens des aktuellen Niveaus des Fahrwerksystems bei einer Bewertung von Frequenzen der gemessenen Höhensignale, ob die gemessenen Höhensignale den vordefinierten Niveauschwellwert (267) unterschreiten, ein Hystereseverhalten (261) der gemessenen Höhensignale (129) berücksichtigt wird.

4. Verfahren nach Anspruch 1, wobei das Verfahren weiter eine wiederholte Überwachung und Identifizierung von Prozessen (121, 122) und Komponenten (114, 131, 133) eines pneumatischen Aktuatorensystems (102) des pneumatischen Niveauregelsystems umfasst.

5. Verfahren nach Anspruch 1, wobei die vordefinierten technischen Maßnahmen (263, 264, 265) weiter dazu geeignet sind, das aktuelle Niveau (129) des Fahrwerksystems unter den mindestens einen Niveauschwellwert (267, 268, 269) zu senken (144, 145, 146, 147) und/oder eine Stabilität des Fahrwerksystems zu erhöhen (152, 153).

6. Verfahren nach einem der vorhergehenden Ansprüche, wobei die technischen Maßnahmen (263, 264, 265), im Falle, dass das aktuelle Niveau (129) des Fahrwerksystems den mindestens einen Niveauschwellwert (267, 268, 269) und den zugeordneten Zeitintervallschwellwert überschreitet, umfassen:
- eine Steuerung der Prozesse (121, 122) und Komponenten (144, 145, 146, 147) des pneumatischen Aktuatorensystems (102) des pneumatischen Niveauregelsystems.

7. Verfahren nach einem der vorhergehenden Ansprüche, wobei das Verfahren weiterhin eine Auswertung (117, 156) der eingeleiteten technischen Maßnahmen (263, 264, 265) umfasst.

8. Verfahren nach einem der vorhergehenden Ansprüche, wobei bei Überschreitung des mindestens einen Niveauschwellwerts (267, 268, 269) und des zugeordneten Zeitintervallschwellwerts (270, 271, 272) vordefinierte Fehlereinträge (154) zur Protokollierung und/oder zur Fehlerdiagnose gesetzt werden.

9. Verfahren nach einem der vorhergehenden Ansprüche, wobei bei Überschreitung des mindestens einen Niveauschwellwerts (267, 268, 269) und des zugeordneten Zeitintervallschwellwerts (270, 271, 272) vordefinierte Warnstufen (367, 368, 369) zur Klassifizierung dieser Überschreitung gesetzt werden, wobei in Abhängigkeit von den Warnstufen (367, 368, 369) mindestens eine von den vordefinierten technischen Maßnahmen (263, 264, 265) eingeleitet wird, die dazu geeignet ist, das aktuelle Niveau (129) des Fahrwerksystems unter den mindestens einen Niveauschwellwert (267, 268, 269) zu senken (144, 145, 146, 147) und/oder eine Stabilität des Fahrwerksystems zu erhöhen (152, 153).

10. Verfahren nach einem der vorhergehenden Ansprüche, wobei bei Überschreitung des mindestens einen Niveauschwellwerts (267, 268, 269) und des zugeordneten Zeitintervallschwellwerts (270, 271, 272) mindestens ein Informationssignal (149, 150, 151) und/oder mindestens ein Kommando (144, 145, 146, 147, 153) an weitere definierbare Schnittstellen gesendet werden, die dazu geeignet sind, Maßnahmen (263, 264, 265) zur Senkung des aktuellen Niveaus (129) und/oder zur Erhöhung der Stabilität des Fahrwerksystems einzuleiten.

11. Computerprogrammprodukt (115) mit von einem Prozessor ausführbaren Instruktionen zur Durchführung der Verfahrensschritte gemäß einem der vorigen Ansprüche.

12. Kontrollvorrichtung zur Überwachung und Steuerung eines pneumatischen Niveauregelsystems eines Fahrwerksystems mit:
- Mitteln (101) zur wiederholten Messung eines aktuellen Niveaus (129) des Fahrwerksystems,
- Mitteln zur Erkennung einer Überschreitung von mindestens einem vordefinierten Niveauschwellwert (267, 268, 269) durch das aktuelle Niveau (129) des Fahrwerksystems, wobei dem Niveauschwellwert (267, 268, 269) ein Zeitintervallschwellwert (270, 271, 272) zugeordnet ist,
- Mitteln zur wiederholten Messung eines Zeitintervalls, in welchem das aktuelle Niveau (129) des Fahrwerksystems mindestens den einen vordefinierten Niveauschwellwert (267, 268, 269) überschreitet,
- Mitteln zur Erkennung einer Überschreitung des dem mindestens einen vordefinierten Niveauschwellwert (267, 268, 269) zugeordneten vordefinierten Zeitintervallschwellwerts (270, 271, 272) durch das Zeitintervall,
- Mitteln zur wiederholten Überprüfung, ob sowohl der mindestens eine Niveauschwellwert (267, 268, 269) als auch der zugeordnete Zeitintervallschwellwert (270, 271, 272) überschritten sind,
- Mitteln (128) zur automatischen Auslösung von vordefinierten technischen Maßnahmen (263, 264, 265), die dazu geeignet sind, ein weiteres Ansteigen des aktuelle Niveaus (129) des Fahrwerksystems zu verhindern und/oder das aktuelle Niveau (129) des Fahrwerksystems unter den mindestens einen Niveauschwellwert (267, 268, 269) zu senken und/oder eine Stabilität des Fahrwerksystems zu erhöhen, wenn sowohl der mindestens eine Niveauschwellwert (267, 268, 269) als auch der zugeordnete Zeitintervallschwellwert (270, 271, 272) überschritten sind, **dadurch gekennzeichnet, dass** die technischen Maßnahmen (263, 264, 265) umfassen:
- eine Zwangszuschaltung eines elektronischen Stabilitätsprogramms (152), und/oder
- eine Geschwindigkeitsbegrenzung (153);
- Mitteln zur Deaktivierung der automatisch ausgelösten Maßnahmen (263, 264, 265), wenn die Überprüfung ergibt, dass das aktuelle Niveau (129) des Fahrwerksystems den mindestens einen Niveauschwellwert (267,) abzüglich einer Hysterese (261) nach Ablauf des zugeordneten Zeitintervallschwellwerts unterschreitet.

## Claims

1. Method for monitoring and controlling a pneumatic ride height control system of a chassis system, wherein the method comprises the steps:
- repeated measurement of a current ride height (129) of the chassis system,
- detecting at least one predefined ride height threshold value (267, 268, 269) being exceeded by the current ride height (129) of the chassis system, wherein a time interval threshold value (270, 271, 272) is associated with the at least one ride height threshold value (267, 268, 269),
- repeated measurement of a time interval in which the current ride height (129) of the chassis system exceeds at least one predefined ride height threshold value (267, 268, 269),
- detecting the at least one predefined time interval threshold value (270, 271, 272) associated with the predefined ride height threshold value (267, 268, 269) being exceeded by the measured time interval;
- repeated checking of whether both the at least one ride height threshold value (267, 268, 269) and also the associated time interval threshold value (270, 271, 272) are exceeded,
- and if this is the case, automatic activation (128) of predefined technical measures (263, 264, 265) that are at least suitable for preventing further raising of the current ride height (129) of the chassis system and/or for increasing a stability of the chassis system (152, 153),
**characterized in that**
the technical measures (263, 264, 265), in cases in which the current ride height (129) of the chassis system exceeds the at least one ride height threshold value (267, 268, 269) and the associated time interval threshold value, comprise:
- activating auxiliary systems ensuring the stability of the chassis system in the form of electronic stability programs (152), and/or
- a control adjustment of vehicle components for reduction of a speed (153) of the chassis system,
- deactivating (266) the automatically activated measures (263, 264, 265) if the repeated checking reveals that the current ride height (129) of the chassis system is below the at least one ride height threshold value (267) minus a hysteresis (261) after the associated time interval threshold value has elapsed.

2. Method according to Claim 1, wherein during the repeated measurement of the current ride height (129) of the chassis system a frequency assessment (111) of measured height signals (129) is performed, wherein the influence of vehicle dynamic variables for different driving maneuvers is assessed (135, 137, 139, 119) and/or a degree of weight loading (120) of the chassis system is taken into account.

3. Method according to Claim 2, wherein in cases of a lowering of the current ride height of the chassis system during an assessment of frequencies of the measured height signals as to whether the measured height signals are below the predefined ride height threshold value (267), a hysteresis behavior (261) of the measured height signals (129) is taken into account.

4. Method according to Claim 1, wherein the method also comprises the repeated monitoring and identification of processes (121, 122) and components (114, 131, 133) of a pneumatic actuator system (102) of the pneumatic ride height control system.

5. Method according to Claim 1, wherein the predefined technical measures (263, 264, 265) are further suitable for lowering (144, 145, 146, 147) the current ride height (129) of the chassis system below the at least one ride height threshold value (267, 268, 269) and/or to increase (152, 153) a stability of the chassis system.

6. Method according to any one of the preceding claims, wherein the technical measures (263, 264, 265), in cases in which the current ride height (129) of the chassis system exceeds the at least one ride height threshold value (267, 268, 269) and the associated time interval threshold value, comprise:
- controlling the processes (121, 122) and components (144, 145, 146, 147) of the pneumatic actuator system (102) of the pneumatic ride height control system.

7. Method according to any one of the preceding claims, wherein the method also comprises an assessment (117, 156) of the activated technical measures (263, 264, 265).

8. Method according to any one of the preceding claims, wherein on exceeding the at least one ride height threshold value (267, 268, 269) and the associated time interval threshold value (270, 271, 272), predefined fault entries (154) are set for logging and/or for fault diagnosis.

9. Method according to any one of the preceding claims, wherein on exceeding the at least one ride height threshold value (267, 268, 269) and the associated time interval threshold value (270, 271, 272), predefined warning levels (367, 368, 369) are set for classification of said exceeding event, wherein depending on the warning levels (367, 368, 369) at least one of the predefined technical measures (263, 264, 265) is activated that is suitable for lowering (144, 145, 146, 147) the current ride height (129) of the chassis system below the at least one ride height threshold value (267, 268, 269) and/or for increasing (152, 153) a stability of the chassis system.

10. Method according to any one of the preceding claims, wherein on exceeding the at least one ride height threshold value (267, 268, 269) and the associated time interval threshold value (270, 271, 272), at least one information signal (149, 150, 151) and/or at least one command (144, 145, 146, 147, 153), which are suitable for activating measures (263, 264, 265) for lowering the current ride height (129) and/or for increasing the stability of the chassis system, are sent to further interfaces that can be defined.

11. Computer program product (115) with instructions that can be executed by a processor for performing process steps according to any one of the preceding claims.

12. Control device for monitoring and controlling a pneumatic ride height control system of a chassis system with:
- a means (101) for repeated measurement of a current ride height (129) of the chassis system,
- a means of detecting at least one predefined ride height threshold value (267, 268, 269) being exceeding by the current ride height (129) of the chassis system, wherein a time interval threshold value (270, 271, 272) is associated with the ride height threshold value (267, 268, 269),
- a means of repeated measurement of a time interval in which the current ride height (129) of the chassis system exceeds at least the one predefined ride height threshold value (267, 268, 269),
- a means of detecting the predefined time interval threshold value (270, 271, 272) associated with the at least one predefined ride height threshold value (267, 268, 269) being exceeding by the time interval,
- a means of repeated checking as to whether both the at least one ride height threshold value (267, 268, 269) and also the associated time interval threshold value (270, 271, 272) are exceeded,
- a means (128) for the automatic activation of predefined technical measures (263, 264, 265) that are suitable for preventing further raising of the current ride height (129) of the chassis system and/or for lowering the current ride height (129) of the chassis system below the at least one ride height threshold value (267, 268, 269) and/or for increasing a stability of the chassis system if both the at least one ride height threshold value (267, 268, 269) and also the associated time interval threshold value (270, 271, 272) are exceeded,
**characterized in that**
the technical measures (263, 264, 265) comprise:
- a forced activation of an electronic stability program (152), and/or
- a speed limitation (153);
- a means of deactivating the automatically activated measures (263, 264, 265) if the checking reveals that the current ride height (129) of the chassis system is below the at least one ride height threshold value (267) minus a hysteresis (261) after the associated time interval threshold value has elapsed.

## Revendications

1. Procédé de surveillance et de commande d'un système pneumatique de régulation du niveau d'un système de châssis, dans lequel le procédé comprend les étapes suivantes:
- mesure répétée d'un niveau actuel (129) du système de châssis,
- reconnaissance d'un dépassement d'au moins une valeur de seuil de niveau prédéfinie (267, 268, 269) par le niveau actuel (129) du système de châssis, une valeur de seuil d'intervalle de temps (270, 271, 272) étant associée à l'au moins une valeur de seuil de niveau (267, 268, 269),
- mesure répétée d'un intervalle de temps, dans lequel le niveau actuel (129) du système de châssis dépasse l'au moins une valeur de seuil de niveau prédéfinie (267, 268, 269),
- reconnaissance d'un dépassement de la valeur de seuil d'intervalle de temps prédéfinie (270, 271, 272) associée à l'au moins une valeur de seuil de niveau prédéfinie (267, 268, 269) par l'intervalle de temps mesuré;
- contrôle répété pour voir si aussi bien l'au moins une valeur de seuil de niveau (267, 268, 269) que la valeur de seuil d'intervalle de temps associée (270, 271, 272) sont dépassées,
- et si c'est le cas, déclenchement automatique (128) de mesures techniques prédéfinies (263, 264, 265), qui conviennent au moins pour empêcher une nouvelle hausse du niveau actuel (129) du système de châssis et/ou pour augmenter (152, 153) une stabilité du système de châssis,
**caractérisé en ce que**, dans le cas où le niveau actuel (129) du système de châssis dépasse l'au moins une valeur de seuil de niveau (267, 268, 269) et la valeur de seuil d'intervalle de temps associée, les mesures techniques (263, 264, 265) comprennent:
- une mise en circuit de systèmes additionnels assurant la stabilité du système de châssis sous la forme de programmes de stabilité électroniques (152), et/ou
- un réglage par régulation de composants du véhicule pour la réduction d'une vitesse (153) du système de châssis,
- désactivation (266) des mesures déclenchées automatiquement (263, 264, 265), lorsque le contrôle répété indique que le niveau actuel (129) du système de châssis descend en dessous de l'au moins une valeur de seuil de niveau (267) après déduction d'une hystérésis (261) après l'expiration de la valeur de seuil d'intervalle de temps associée.

2. Procédé selon la revendication 1, dans lequel lors de la mesure répétée du niveau actuel (129) du système de châssis on effectue une analyse de fréquence (111) de signaux de hauteur mesurés (129), dans lequel on évalue une influence de grandeurs dynamiques de marche lors de différentes manoeuvres de conduite (135, 137, 139, 119) et/ou on tient compte d'un degré de charge pondérale (120) du système de châssis.

3. Procédé selon la revendication 2, dans lequel, dans le cas d'un abaissement du niveau actuel du système de châssis lors d'une analyse de fréquences des signaux de hauteur mesurés, pour voir si les signaux de hauteur mesurés descendent sous la valeur de seuil de niveau prédéfinie (267), on tient compte d'un comportement d'hystérésis (261) des signaux de hauteur (129) mesurés.

4. Procédé selon la revendication 1, dans lequel le procédé comprend en outre une surveillance et une identification répétées de processus (121, 122) et de composants (114, 131, 133) d'un système d'actionneur pneumatique (102) du système pneumatique de régulation du niveau.

5. Procédé selon la revendication 1, dans lequel les mesures techniques prédéfinies (263, 264, 265) conviennent en outre pour abaisser (144, 145, 146, 147) le niveau actuel (129) du système de châssis en dessous de l'au moins une valeur de seuil de niveau (267, 268, 269) et/ou pour augmenter (152, 153) une stabilité du système de châssis.

6. Procédé selon l'une quelconque des revendications précédentes, dans lequel, dans le cas où le niveau actuel (129) du système de châssis dépasse l'au moins une valeur de seuil de niveau (267, 268, 269) et la valeur de seuil d'intervalle de temps associée, les mesures techniques (263, 264, 265) comprennent:
- une commande des processus (121, 122) et des composants (144, 145, 146, 147) du système d'actionneur pneumatique (102) du système pneumatique de régulation du niveau.

7. Procédé selon l'une quelconque des revendications précédentes, dans lequel le procédé comprend en outre une évaluation (117, 156) des mesures techniques appliquées (263, 264, 265).

8. Procédé selon l'une quelconque des revendications précédentes, dans lequel, en cas de dépassement de l'au moins une valeur de seuil de niveau (267, 268, 269) et de la valeur de seuil d'intervalle de temps associée (270, 271, 272), on applique des entrées défectueuses prédéfinies (154) pour l'enregistrement et/ou pour le diagnostic des défauts.

9. Procédé selon l'une quelconque des revendications précédentes, dans lequel, en cas de dépassement de l'au moins une valeur de seuil de niveau (267, 268, 269) et de la valeur de seuil d'intervalle de temps associée (270, 271, 272), on applique des étapes d'avertissement prédéfinies (367, 368, 369) pour la classification de ce dépassement, dans lequel on exécute en fonction des étapes d'avertissement (367, 368, 369), au moins une des mesures techniques prédéfinies (263, 264, 265), qui conviennent pour abaisser (144, 145, 146, 147) le niveau actuel (129) du système de châssis en dessous de l'au moins une valeur de seuil de niveau (267, 268, 269) et/ou pour augmenter (152, 153) une stabilité du système de châssis.

10. Procédé selon l'une quelconque des revendications précédentes, dans lequel, en cas de dépassement de l'au moins une valeur de seuil de niveau (267, 268, 269) et de la valeur de seuil d'intervalle de temps associée (270, 271, 272), on envoie au moins un signal d'information (149, 150, 151) et/ou au moins une commande (144, 145, 146, 147, 153) à d'autres interfaces définissables, qui conviennent pour exécuter des mesures (263, 264, 265) destinées à abaisser le niveau actuel (129) et/ou à augmenter la stabilité du système de châssis.

11. Produit de programme informatique (115) avec des instructions exécutables par un processeur pour la mise en oeuvre des étapes de procédé selon l'une quelconque des revendications précédentes.

12. Dispositif de contrôle pour la surveillance et la commande d'un système pneumatique de régulation du niveau d'un système de châssis, avec:
- des moyens (101) pour la mesure répétée d'un niveau actuel (129) du système de châssis,
- des moyens pour reconnaître un dépassement d'au moins une valeur de seuil de niveau prédéfinie (267, 268, 269) par le niveau actuel (129) du système de châssis, dans lequel une valeur de seuil d'intervalle de temps (270, 271, 272) est associée à la valeur de seuil de niveau (267, 268, 269),
- des moyens pour la mesure répétée d'un intervalle de temps, dans lequel le niveau actuel (129) du système de châssis dépasse au moins une valeur de seuil de niveau prédéfinie (267, 268, 269),
- des moyens pour reconnaître un dépassement de la valeur de seuil d'intervalle de temps (270, 271, 272) prédéfinie associée à l'au moins une valeur de seuil de niveau prédéfinie (267, 268, 269) par l'intervalle de temps,
- des moyens pour le contrôle répété, pour voir si aussi bien l'au moins une valeur de seuil de niveau (267, 268, 269) que la valeur de seuil d'intervalle de temps associée (270, 271, 272) sont dépassées,
- des moyens (128) pour le déclenchement automatique de mesures techniques prédéfinies (263, 264, 265), qui conviennent pour empêcher une nouvelle hausse du niveau actuel (129) du système de châssis et/ou pour abaisser le niveau actuel (129) du système de châssis en dessous de l'au moins une valeur de seuil de niveau (267, 268, 269) et/ou pour augmenter une stabilité du système de châssis, lorsqu'aussi bien l'au moins une valeur de seuil de niveau (267, 268, 269) que la valeur de seuil d'intervalle de temps associée (270, 271, 272) sont dépassées,
**caractérisé en ce que** les mesures techniques (263, 264, 265) comprennent:
- une mise en circuit forcée d'un programme de stabilité électronique (152), et/ou
- une limitation de la vitesse (153);
- des moyens pour désactiver les mesures déclenchées automatiquement (263, 264, 265), lorsque le contrôle indique que le niveau actuel (129) du système de châssis descend en dessous de l'au moins une valeur de seuil de niveau (267,), après déduction d'une hystérésis (261) après l'expiration de la valeur de seuil d'intervalle de temps associée.
